# EUROPÄISCHE PATENTSCHRIFT

(11) **EP 3 818 310 B1**
(45) Veröffentlichungstag und Bekanntmachung des Hinweises auf die Patenterteilung: **11.10.2023**
(21) Anmeldenummer: 19722818.2
(22) Anmeldetag: 29.04.2019
(51) Int. Cl.: F24F 13/30, B60H 1/00

(54) **KLIMAGERÄT**
AIR-CONDITIONING DEVICE
CLIMATISEUR

(30) Priorität: 06.07.2018 DE 102018005338
(43) Veröffentlichungstag der Anmeldung: 12.05.2021
(73) Patentinhaber: Truma Gerätetechnik GmbH & Co. KG, 85640 Putzbrunn (DE)
(72) Erfinder: VENSCHOTT, Mathias, 85640 Putzbrunn (DE)
(74) Vertreter: Prinz & Partner mbB
(86) Internationale Anmeldenummer: PCT/EP2019/060866
(87) Internationale Veröffentlichungsnummer: WO 2020/007518

(56) Entgegenhaltungen:
- EP-A2- 2 792 964
- DE-A1- 4 440 044
- DE-A1-102007 019 078
- US-A- 4 748 827

## Beschreibung

Die vorliegende Erfindung betrifft ein Klimagerät. Dabei ist das Klimagerät zur Montage auf einem Dach ausgestaltet. Das Klimagerät weist eine Mehrzahl von Funktionskomponenten auf. Die Funktionskomponenten der Mehrzahl von Funktionskomponenten sind in einem Gehäuse angeordnet. Das Gehäuse weist eine Befestigungsseite für die Montage auf dem Dach auf. Das Klimagerät weist zwei Tragearme auf. Die zwei Tragearme tragen die mindestens eine Funktionskomponente der Mehrzahl von Funktionskomponenten so, dass die mindestens eine Funktionskomponente von der Befestigungsseite aus höher als andere Funktionskomponenten, die ebenfalls zu der Mehrzahl von Funktionskomponenten gehören, angeordnet ist. Das Dach ist z. B. Teil eines Fahrzeugs oder eines Boots oder allgemein eines Raumes, der durch das Klimagerät z. B. gekühlt werden soll. Das Dach kann somit auch allgemein eine Decke eines Raumes sein.

Ein Klimagerät (eine alternative Bezeichnung ist Klimaanlage) dient beispielsweise zum Kühlen von Innenräumen von Wohnwagen oder Booten. Dabei befinden sich die erforderlichen Funktionskomponenten in einem umgebenden Gehäuse, das mit einer Befestigungsseite auf einem Dach befestigt wird. Unterhalb des Dachs befindet sich beispielsweise der Raum, der durch die Klimaanlage gekühlt werden soll.

Das der Luftkühlung zugrundeliegende Prinzip der Kälteerzeugung mittels eines Kühlkreislaufs ist seit langem bekannt und beispielsweise in der WO 2007/042065 A1 beschrieben. Das Gehäuse verfügt über eine Halterung aus einem geschäumten und eine komplexe Struktur aufweisenden Kunststoffmaterial. Ein Klimagerät, in welchem der Kondensator auf einer Grundplatte erhöht angeordnet ist, zeigt die WO 2006/021226 A1. Eine Klimaanlage mit einem erhöht angeordneten Wärmetauscher zeigt die DE 10 2006 009 735 A1. Dokument EP2792964 zeigt ein Klimagerät mit den Merkmalen des Oberbegriffs von Anspruch 1.

Heutzutage werden Produkte häufig nicht nur in einem Land, sondern weltweit hergestellt und vertrieben. Einerseits sind daher, bedingt durch die jeweiligen Normen, Vorgaben, Bedürfnisse oder Anforderungen, solche Produkte für den jeweiligen Markt zu adaptieren. Andererseits kann sich auch zeigen, dass die Fertigung selbst nicht überall auf dem gleichen Niveau durchgeführt werden kann.

Ziel ist es somit, Produkte möglichst modular auszugestalten. Vorteilhaft ist es zudem, die Produkte auf einen stets gleichbleibenden Kern mit auf den betroffenen Markt anzupassenden Elementen zu reduzieren. Dabei ist es auch vorteilhaft, wenn der Aufbau aus möglichst einfachen Bauteile oder Elementen besteht, die die Wahrscheinlichkeit erhöhen, dass sie in allen Ländern identisch gegeben oder einfach herzustellen sind. Klimaanlagen sind solche komplexen Produkte, die jeweils infolge von Normen und Vorlieben der Verbraucher für die Märkte anzupassen sind. So denke man beispielsweise an die unterschiedlichen Vorgaben für das jeweils zu verwendende Kältemittel. Zudem zeigt sich auch bei dem Zusammenspiel von so vielen und so unterschiedlichen Bestandteilen, dass es nicht aufwandsfrei ist, in unterschiedlichen Regionen die gleichen hohen Ansprüche an die optimale Fertigung zu erfüllen.

Die Aufgabe der Erfindung besteht daher darin, eine Klimaanlage vorzuschlagen, die sich möglichst einfach fertigen lässt und die auch eine leichte Adaptierung an unterschiedliche Fertigungsbedingungen erlaubt. Bei der erfindungsgemäßen Klimaanlage soll es sich somit insbesondere auch um eine Alternative zum Stand der Technik handeln.

Die Erfindung löst die Aufgabe durch die Merkmale des Anspruchs 1 bzw. des Anspruchs 2. Durch die zwei Tragearme befindet sich die mindestens eine Funktionskomponente von der Befestigungsseite aus (gesehen oder relativ dazu angeordnet) höher als andere Funktionskomponenten. Bei den zwei Seiten der Funktionskomponente, die jeweils von einem Tragearm gehalten werden, handelt es sich insbesondere um zwei einander gegenüberliegende Seite der Funktionskomponente. Die beiden stirnseitigen Endbereiche der zwei Tragearme, die jeweils die mindestens eine Funktionskomponente tragen, verlaufen in einer Ausgestaltung im Wesentlichen auf einem gleichen Niveau, sodass sich zwischen beiden Tragearmen an dieser oberen Stirnseite ein planer Bereich ergibt, der von den zwei Tragearmen für die höher angeordnete Funktionskomponente aufgespannt wird. Die Form des Großbuchstabens "S" der Tragearme kann dabei gerundet oder frei von Abrundungen sein oder in einer Mischform verlaufen. Gemäß der Erfindung können die zwei Tragearme auch jeweils die Form des Großbuchstabens "Z" ohne den mittleren Querbalken aufweisen. Der Großbuchstabe "S" kann auch gespiegelt sein.

Gemäß der Erfindung ist eine Funktionskomponente höher als alle anderen Funktionskomponenten angeordnet. In einer alternativen Ausgestaltung ist die mindestens eine Funktionskomponente höher als ein Teil der Mehrzahl der Funktionskomponenten angeordnet.

Die Funktionskomponenten der Klimaanlage sind dabei beispielsweise ein Verflüssiger, ein Kompressor, eine Expansionsvorrichtung, ein Verdampfer, ein Kältemittelreservoir (z. B. ein Tank) oder auch eine Elektronikeinheit zum Steuern der anderen Funktionskomponenten. Weitere Funktionskomponente sind beispielsweise ein Gebläse, z. B. ein dem Verflüssiger oder dem Verdampfer zugeordnetes Gebläse.

Durch die höher gelegene Positionierung und den damit verbundenen internen Aufbau der Klimaanlage ergibt sich in einer Ausgestaltung insbesondere ein Hohlbereich zum Dach unterhalb der Funktionskomponente, der in einer Ausgestaltung von Luft frei durchströmt wird.

Durch das Höherlegen eines Teils der Klimaanlage ergibt sich auch der Vorteil, dass die Auflagefläche der Klimaanlage auf dem Dach für die Montage reduziert wird.

Die zwei Tragearme tragen somit dazu bei, dass die Struktur der Klimaanlage vereinfacht wird und die Verwendung von Bauteilen mit reduzierter Komplexität ausreichend ist.

In einer Ausgestaltung ist die mindestens eine Funktionskomponente mit den beiden Tragearmen, z. B. durch Schrauben, durch Bolzen oder durch Klebeprozesse fest verbunden.

Gemäß einer Ausgestaltung sind die zwei Tragearme spiegelsymmetrisch zueinander ausgestaltet. Die zwei Tragearme sind somit prinzipiell gleich ausgestaltet, sind jedoch gespiegelt zueinander ausgeführt. Diese Ausgestaltung ist beispielsweise dann relevant, wenn die zwei Tragearme die mindestens eine Funktionskomponente seitlich umfassen oder gar in einer Ausgestaltung die seitlichen Tragestrukturen entlang einer Längserstreckung der Klimaanlage darstellen.

Gemäß der Erfindung weisen die Tragarme ein C-Profil auf. Ein C-Profil ist eine relativ einfache Struktur, die somit keine großen Anforderungen an die Ausgangswerkstücke oder ggf. Halbzeuge stellt. Das C-Profil ist in der Regel auch eine mechanisch stabile Form. Sind die beiden Tragearme spiegelsymmetrisch ausgestaltet, so öffnen sich in einer Ausgestaltung die C-Profile der zwei Tragearme jeweils nach innen und somit in Richtung der höher angeordneten Funktionskomponente.

Die Erfindung sieht vor, dass die mindestens eine Funktionskomponente teilweise in einem von dem C-Profil umschlossenen Bereich angeordnet ist. In dieser Ausgestaltung ruht die Funktionskomponente teilweise in dem Bereich, den das "C" des C-Profils bildet. Beide Tragarme sind mit einem C-Profil ausgestaltet, die beiden Tragearme umfassen die Funktionskomponente und die Funktionskomponente liegt jeweils mit zwei seitlichen Abschnitten in den von den C-Profilen umfassten Bereichen.

Eine Ausgestaltung besteht darin, dass die zwei Tragearme stirnseitig mittels eines Abschlusselements miteinander kontaktiert sind. Das Abschlusselement fungiert in einer Ausgestaltung als eine Art von Kappe für die Stirnseiten der beiden Tragearme. Zudem ergibt sich in einer Ausgestaltung auch eine erhöhte Stabilität.

In einer Ausgestaltung ist ein Tragearm einteilig oder einstückig ausgestaltet. In einer Variante sind die zwei Tragearme einteilige Stahlbauteile.

Eine alternative Ausgestaltung sieht vor, dass mindestens ein Tragearm der mindestens zwei Tragearme mehrteilig ausgestaltet ist und mindestens zwei Teilkomponenten aufweist. Ein Tragearm besteht in dieser Ausgestaltung aus mehreren Teilen oder Einzelstücken, die passend ausgestaltet und miteinander verbunden sind. Davon ausgehend lässt sich auch die Struktur oder Form des Tragearms in Teilstrukturen auflösen, die somit entsprechend einfacher ausgeführt und daher leichter zu fertigen sind.

Eine Ausgestaltung besteht darin, dass eine Teilkomponente eine Stirnseite des Tragearms bildet, die die mindestens eine (und somit höher angeordnete) Funktionskomponente trägt. In dieser Ausgestaltung ist insbesondere die Stirnseite eines Tragearms eine Teilkomponente. Daher ist es beispielsweise möglich, für z. B. (passend zu den jeweiligen Normen) unterschiedlich dimensionierte (höher anzuordnende) Funktionskomponenten jeweils eine passende Teilkomponente der Tragearme vorzusehen und mit den restlichen (vorzugsweise über die Varianten hinweg gleichbleibenden) Teilkomponenten der Tragearme zu verbinden. Daher kann auch für unterschiedliche Funktionskomponenten dennoch auf wenigstens eine stets gleichbleibende Teilkomponente der Tragearme zurückgegriffen werden.

Eine Ausgestaltung sieht vor, dass eine Teilkomponente eine Stirnseite des Tragearms bildet, die Funktionskomponenten der Mehrzahl von Funktionskomponenten trägt, zu denen die mindestens eine Funktionskomponente höher angeordnet ist. In dieser Ausgestaltung bildet eine Teilkomponente die (somit untere) Stirnseite, die die tiefer angeordneten Funktionskomponenten trägt. Es handelt sich somit quasi um die umgekehrte Ausgestaltung zu der vorgenannten Ausgestaltung.

Eine Ausgestaltung besteht darin, dass mindestens ein Tragearm der mindestens zwei Tragearme mehrteilig ausgestaltet ist und drei Teilkomponenten aufweist, dass eine erste Teilkomponente eine Stirnseite des Tragearms bildet, die die mindestens eine Funktionskomponente trägt, dass eine zweite Teilkomponente eine andere Stirnseite des Tragearms bildet, die Funktionskomponenten der Mehrzahl von Funktionskomponenten trägt, zu denen die mindestens eine Funktionskomponente höher angeordnet ist, und dass eine dritte Teilkomponente der Verbindung zwischen der ersten Teilkomponente und der zweiten Teilkomponente dient.

In dieser Ausgestaltung besteht ein Tragearm aus drei Teilkomponenten, die die beiden Stirnseiten und ein Mittelstück zwischen den Stirnbereichen bilden. Das Mittelstück (also die dritte Teilkomponente) bewirkt vorzugsweise den Höhenunterschied zwischen der einen höher angeordneten Funktionskomponente und den anderen, tiefer angeordneten Funktionskomponenten. Da die beiden anderen Teilkomponenten (erste und zweite Teilkomponente) jeweils die Funktionskomponenten tragen und damit auch von deren jeweiliger Form und Ausgestaltung abhängig sind, sind - in einer Ausführungsvariante - diese zwei Teilkomponenten (also die erste und die zweite Teilkomponente) jeweils passend zu wählen und wird die Form des Mittelstücks (also der dritten Teilkomponente) beibehalten. Dies erlaubt es, auf unterschiedliche Ausführungsvarianten oder spezifische Ländervorgaben einzugehen und gleichzeitig eine einheitliche Grundform beizubehalten.

Eine Ausgestaltung sieht vor, dass Teilkomponenten der mindestens zwei oder drei Teilkomponenten aus unterschiedlichen Materialien bestehen. Zu den unterschiedlichen Materialen gehören insbesondere auch unterschiedliche Herstellungsmethoden. In dieser Ausgestaltung besteht somit mindestens ein Tragearm (vorzugsweise beide Tragearme) aus unterschiedlichen Materialien, die jeweils den Teilkomponenten zugeordnet sind.

Eine Ausgestaltung besteht darin, dass das Klimagerät eine Isolationskomponente aufweist, und dass die Isolationskomponente einige Funktionskomponenten der Mehrzahl von Funktionskomponenten thermisch isolierend umfasst, zu denen die mindestens eine Funktionskomponente höher angeordnet ist. In dieser Ausgestaltung werden die Funktionskomponenten, die sich auf dem niedrigeren Niveau befinden, in eine Isolationskomponente, z. B. eine Art Box aus einem Kunststoff eingebracht.

Eine Ausgestaltung sieht vor, dass das Klimagerät eine Umfassungskomponente aufweist, und dass die Umfassungskomponente zumindest die von der Befestigungsseite des Klimageräts abweichenden Außenseiten des Klimageräts bildet.

Eine Ausgestaltung besteht darin, dass es sich bei der Umfassungskomponente um ein Tiefziehgehäuse aus einem Kunststoff handelt.

Die Umfassungskomponente dient dem eigentlichen Aussehen der Klimaanlage und bildet den äußeren Abschluss. Daher kann die Umfassungskomponente beispielsweise aus einem Kunststoff bestehen, der auch eine entsprechende farbliche oder haptische oder witterungsbeständige Ausführung erlaubt.

Eine Ausgestaltung sieht vor, dass in der Umfassungskomponente ein Gebläse angeordnet ist. Das Gebläse befindet sich in einer Ausgestaltung oberhalb der Funktionskomponente, die oberhalb der anderen Funktionskomponenten angeordnet ist. In einer Ausgestaltung ist das Gebläse einem Verflüssiger als Funktionskomponente zugeordnet, sodass es sich um ein Verflüssiger-Gebläse handelt.

Eine Ausgestaltung besteht darin, dass das Klimagerät einen Luftverteiler aufweist, und dass der Luftverteiler - je nach Ausgestaltung mittelbar oder unmittelbar - mit den Tragearmen verbindbar ausgestaltet ist. Für diese Ausgestaltung wird beispielsweise bei der Montage ein Durchbruch in dem Dach erzeugt, sodass der Luftverteiler unterhalb und die anderen Komponenten und damit auch die Tragearme und die Funktionskomponenten oberhalb des Dachs miteinander verbunden werden können.

Gemäß einer Ausgestaltung ist vorgesehen, dass die zwei Tragearme genau eine Funktionskomponente so tragen, dass die genau eine Funktionskomponente von der Befestigungsseite aus höher als die anderen Funktionskomponenten angeordnet ist. In dieser Ausgestaltung wird somit explizit nur eine Funktionskomponente durch die zwei Tragearme erhöht gegenüber den anderen Funktionskomponenten gehalten. Das vorgenannte Gebläse, das dem Verflüssiger zugeordnet ist, wäre dabei eine Funktionskomponente, die nicht zu denjenigen Funktionskomponenten gehört, die tiefer als die erhöhte Funktionskomponente (in dem Ausführungsbeispiel vorzugsweise der Verflüssiger) angeordnet sind. Die eine Funktionskomponente ist damit nicht höher als alle anderen Funktionskomponenten angeordnet, sondern nur höher als ein Teil. Bei den tiefer befindlichen Funktionskomponenten handelt es sich beispielsweise um diejenigen mit einem höheren Gewicht.

Eine Ausgestaltung sieht vor, dass die mindestens eine (oder in einer Ausgestaltung die einzige) Funktionskomponente, die die zwei Tragearme tragen, ein Verflüssiger ist.

Eine Ausgestaltung besteht darin, dass die Funktionskomponenten der Mehrzahl von Funktionskomponenten, zu denen die mindestens eine Funktionskomponente höher angeordnet ist, einen Kompressor, eine Expansionsvorrichtung, einen Verdampfer und/oder ein Kältemittelreservoir umfassen.

Eine Ausgestaltung sieht vor, dass mindestens ein Tragearm zumindest teilweise aus einem Strangpressteil besteht. In einer Ausgestaltung sind die zwei Tragearme jeweils Strangpressteile oder bestehen zumindest teilweise daraus.

Im Einzelnen gibt es eine Vielzahl von Möglichkeiten, das erfindungsgemäße Klimagerät auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. Es zeigen:
- Fig. 1: eine schematische Darstellung eines Klimageräts,
- Fig. 2: einen Schnitt durch ein schematisch dargestelltes Klimagerät,
- Fig. 3: einen anderen Schnitt durch einen Teil eines Stirnbereichs des Klimageräts der Fig. 2 und
- Fig. 4: eine Draufsicht auf einen Teil des Stirnbereichs des Klimageräts der Fig. 2 und Fig. 3.

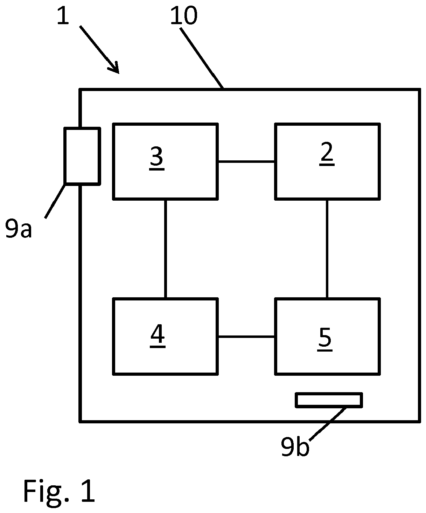

Die Fig. 1 zeigt schematisch den Aufbau einer Klimaanlage 1 zum Kühlen eines Raumes, z. B. des Innenraums eines Fahrzeugs. Der damit realisierte Kühlkreislauf oder Kälteprozess ist beispielsweise in der WO 2007/042065 A1 beschrieben.

Für den Kälteprozess verdichtet ein Kompressor (eine alternative Bezeichnung ist Verdichter) 2 ein gasförmiges Kältemittel, das damit Wärme aufnimmt und über eine Kältemittelleitung zu einem Verflüssiger (alternative Bezeichnung: Kondensator) 3 transportiert wird. Der Verflüssiger 3 dient als Wärmetauscher, indem die Wärme des Kältemittels an die kühlere Umgebungsluft abgegeben wird. Die Umgebungsluft wird dabei über ein Verflüssiger-Gebläse 9a angesaugt und nach der Wechselwirkung mit dem Kältemittel wieder ausgeblasen. Infolge der Abgabe der Wärme verflüssigt sich das verdichtete Kältemittel.

Das flüssige und weiterhin unter hohem Druck stehende Kältemittel wird in einer Expansionseinrichtung 4, die z. B. als Drossel ausgestaltet ist, auf einen niedrigeren Druck entspannt. Dabei kühlt das Kältemittel ab.

Im nächsten Schritt gelangt das Kältemittel zu einem Verdampfer 5, durch den die Luft des zu kühlenden Raumes - also z. B. des Innenraums eines Wohnwagens oder eines Wohnmobils - mittels eines Verdampfer-Gebläses 9b geführt wird. Die Luft überträgt dabei ihre Wärme auf das Kältemittel, welches in den gasförmigen Zustand übergeht. Das gasförmige Kältemittel gelangt schließlich zurück zu dem Kompressor 2, sodass der Kühlkreislauf fortgeführt werden kann.

Der Kreislauf lässt sich auch umkehren, sodass die Vorrichtung 1 als Raumheizung dient.

Die beschriebenen Komponenten sind beispielshafte Funktionskomponenten der Klimaanlage 1 und befinden sich teilweise im Innenraum oder teilweise in der Wandung eines Gehäuses 10.

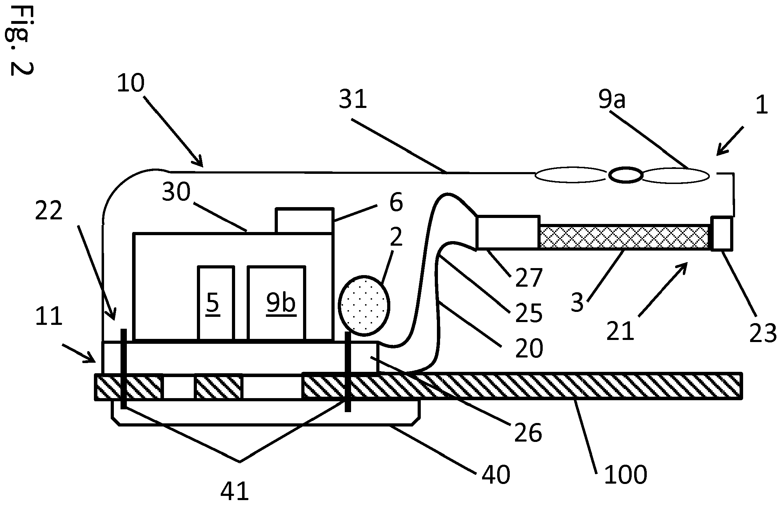

Die Fig. 2 zeigt schematisch das grundlegende Aussehen der Klimaanlage 1. Die Klimaanlage 1 ist hier auf einem Dach 100 aufgebracht und reicht durch Aussparungen in diesem Dach 100 hindurch zu einem Luftverteiler 40 in dem Innenraum, der durch die Klimaanlage 1 gekühlt werden soll. Gehört das Dach 100 zu einem Fahrzeug, so ist die Klimaanlage 1 in Fahrtrichtung auf dem Dach 100 fixiert. Der Hohlraum zwischen der Klimaanlage 1 und dem Dach 100 befindet sich also in Fahrrichtung hinter dem Bereich der Klimaanlage 1, der auf dem Dach 100 ruht.

Zu erkennen ist die - hier gespiegelte - "S"-Form des Tragearms 20.

Der Tragearm 20 ist hier dreiteilig ausgestaltet und verfügt über zwei Teilkomponenten 26, 27, die die Stirnseiten 21, 22 bilden, und über eine mittlere Teilkomponente 25, die den Höhenunterschied zwischen den beiden anderen Teilkomponenten 26, 27 bewirkt. Die obere Teilkomponente 27 und die untere Teilkomponente 26 sind dabei plan ausgeführt, sodass es sich um entsprechend einfach zu fertigende Komponenten handelt. Die eigentliche S-Form steckt hier nur in der mittleren Teilkomponente 25.

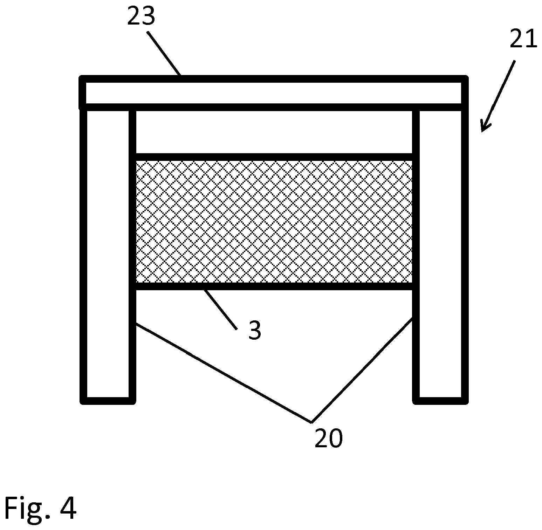

Die obere oder erste Teilkomponente 27, die einer ersten Stirnseite 21 zugewandt ist, trägt und erhöht damit die Funktionskomponente, bei der es sich hier um den Verflüssiger 3 handelt. Unterhalb des Verflüssigers 3 befindet sich ein Hohlraum zum Dach 100, der hier für Luft frei zugänglich ist. Oberhalb des Verflüssigers 3 ist ein dem Verflüssiger zugeordnetes Gebläse 9a (also ein Verflüssiger-Gebläse) angeordnet. Die Endseite des Tragearms 20 und damit das freie Ende der ersten Teilkomponente 27 wird durch ein Abschlusselement 23 verschlossen, das auch den anderen - hier nicht dargestellten - anderen Tragearm kontaktiert (vgl. Fig. 4).

In Richtung der zweiten Stirnseite 22 befindet sich die zweite oder untere Teilkomponente 26. Diese Teilkomponente 26 trägt die anderen Funktionskomponenten. Dabei befinden sich der Verdampfer 5 und das Verdampfer-Gebläse 9b in der Isolationskomponente 30. Zu sehen sind auch, dass die Raumluft durch eine Aussparung angesaugt und gekühlt durch das Verdampfer-Gebläse 9b über eine andere Aussparung im Dach 100 wieder in den Raum eingebracht wird. Außerhalb der Isolationskomponente 30, die eine thermische Isolation bewirkt, befinden sich der Kompressor 2 und hier beispielhaft ein Kältemittelreservoir 6. Da der Kompressor 2 sich erwärmt, ist er durch die Isolationskomponente 30 von dem Verdampfer 5 thermisch getrennt.

Durch die Isolationskomponente 30 hindurch wird somit auch die zu kühlende Raumluft hindurchgeführt.

Die Funktionskomponenten befinden sich in der dargestellten Ausgestaltung auf der unteren Teilkomponente 26, können sich jedoch auch dazwischen - also zwischen beiden Tragearmen 30 - befinden. Die Funktionskomponenten sind hier in einer Isolationskomponente 30 untergebracht, die eine thermische Isolation bewirkt.

In einer alternativen - nicht dargestellten - Ausgestaltung sind die Tragearme 20 einteilig ausgeführt und sind vorzugsweise Strangpressteile aus einem Stahl.

Die Klimaanlage 1 ist über die Befestigungsseite 11 mit dem Dach 100 verbunden, wobei die untere Stirnseite 22 der Tragearme 20 somit auch für die mechanische Befestigung und Stabilität sorgt. Die Fixierung ist hier durch zwei schrauben- oder bolzenähnliche Fixierelemente 41 angedeutet.

Die anderen Seiten der Klimaanlage 1 werden durch eine Umfassungskomponente 31 gebildet, bei der es sich beispielsweise um ein Tiefziehgehäuse aus einem Kunststoff handelt. Diese Umfassungskomponente 31 erfüllt keine haltende Funktion, sondern dient im Wesentlichen nur dem Schutz der eigentlichen Bestandteile der Klimaanlage 1 gegenüber der Außenwelt. In der Umfassungskomponente 31 befindet sich in der gezeigten Ausgestaltung insbesondere auch eine Aussparung, in der das Verflüssiger-Gebläse 9a eingebracht ist.

In der hier dargestellten Ausgestaltung endet die Umfassungskomponente 31 (alternative Bezeichnung wäre Umfassungsgehäuse) in Richtung der Befestigungsseite 11 bzw. des Daches 100 auf der Höhe der Unterkante der Tragearme 20.

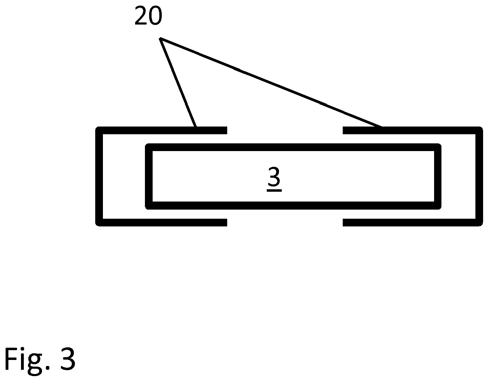

Im Schnitt der Fig. 3 ist zu sehen, dass die beiden Tragearme 20 jeweils ein C-Profil aufweisen und dass die Funktionskomponente 3 in den Bereichen aufliegt, die von den C-Profilen umfasst und vorzugsweise dort auch fixiert werden.

Die Fig. 4 zeigt die Stirnseite 21, die den oberen Teil des Großbuchstabens "S" der Tragearme 20 umfasst (vgl. Fig. 2).

Die Funktionskomponente 3 ruht seitlich in den Tragearmen 20, wie z. B. in der Fig. 3 gezeigt. Die beiden Endbereiche der Funktionskomponenten 3 sind noch über ein Abschlusselement 23 miteinander verbunden. Das Abschlusselement 23 befindet sich dabei in einer Ausgestaltung - ähnlich einem Stopfen - in den offenen Enden der C-Profile der Tragearme 20.

### Bezugszeichenliste

- **1**: Klimagerät
- **2**: Kompressor
- **3**: Verflüssiger
- **4**: Expansionsvorrichtung
- **5**: Verdampfer
- **6**: Kältemittelreservoir
- **9a**: Verflüssiger-Gebläse
- **9b**: Verdampfer-Gebläse
- **10**: Gehäuse
- **11**: Befestigungsseite
- **20**: Tragearm
- **21**: Stirnseite
- **22**: Stirnseite
- **23**: Abschlusselement
- **25**: Teilkomponente
- **26**: Teilkomponente
- **27**: Teilkomponente
- **30**: Isolationskomponente
- **31**: Umfassungskomponente
- **40**: Luftverteiler
- **41**: Fixierelement
- **100**: Dach

## Patentansprüche

1. Klimagerät (1),
wobei das Klimagerät (1) zur Montage auf einem Dach (100) ausgestaltet ist, wobei das Klimagerät (1) eine Mehrzahl von Funktionskomponenten (2, 3, 4, 5, 6) aufweist,
wobei die Funktionskomponenten (2, 3, 4, 5, 6) in einem Gehäuse (10) angeordnet sind,
wobei das Gehäuse (10) eine Befestigungsseite (11) für die Montage auf dem Dach (100) aufweist,
wobei das Klimagerät (1) zwei Tragearme (20) aufweist,
wobei die zwei Tragearme (20) mindestens eine Funktionskomponente (3) der Mehrzahl von Funktionskomponenten (2, 3, 4, 5, 6) so tragen, dass die mindestens eine Funktionskomponente (3) von der Befestigungsseite (11) aus höher als andere Funktionskomponenten (2, 4, 5, 6) der Mehrzahl von Funktionskomponenten (2, 3, 4, 5, 6) angeordnet ist,
wobei die zwei Tragearme (20) die mindestens eine Funktionskomponente (3) seitlich umfassen, sodass jeder Tragearm (20) eine andere Seite der mindestens einen Funktionskomponente (3) trägt,
wobei die zwei Tragearme (20) die mindestens eine Funktionskomponente (3) jeweils im Bereich einer Stirnseite (21) tragen,
wobei die zwei Tragearme (20) jeweils die Form des Großbuchstabens "S" aufweisen, indem jeder Tragearm (20) zwei stirnseitige Bereiche, die sich auf unterschiedlichen Höhen befinden, und einen diese zwei Bereiche verbindenden Bereich hat,
**dadurch gekennzeichnet, dass** die zwei Tragearme (20) jeweils ein C-Profil aufweisen,
wobei die C-Profile der Tragearme (20) sich jeweils in Richtung der mindestens einen Funktionskomponente (3) öffnen, und
wobei die mindestens eine Funktionskomponente (3) teilweise in von den C-Profilen umschlossenen Bereichen angeordnet ist.

2. Klimagerät (1),
wobei das Klimagerät (1) zur Montage auf einem Dach (100) ausgestaltet ist, wobei das Klimagerät (1) eine Mehrzahl von Funktionskomponenten (2, 3, 4, 5, 6) aufweist,
wobei die Funktionskomponenten (2, 3, 4, 5, 6) in einem Gehäuse (10) angeordnet sind,
wobei das Gehäuse (10) eine Befestigungsseite (11) für die Montage auf dem Dach (100) aufweist,
wobei das Klimagerät (1) zwei Tragearme (20) aufweist,
wobei die zwei Tragearme (20) mindestens eine Funktionskomponente (3) der Mehrzahl von Funktionskomponenten (2, 3, 4, 5, 6) so tragen, dass die mindestens eine Funktionskomponente (3) von der Befestigungsseite (11) aus höher als andere Funktionskomponenten (2, 4, 5, 6) der Mehrzahl von Funktionskomponenten (2, 3, 4, 5, 6) angeordnet ist,
wobei die zwei Tragearme (20) die mindestens eine Funktionskomponente (3) seitlich umfassen, sodass jeder Tragearm (20) eine andere Seite der mindestens einen Funktionskomponente (3) trägt,
wobei die zwei Tragearme (20) die mindestens eine Funktionskomponente (3) jeweils im Bereich einer Stirnseite (21) tragen,
wobei die zwei Tragearme (20) jeweils die Form des Großbuchstabens "Z" ohne den mittleren Querbalken aufweisen, indem jeder Tragearm (20) zwei stirnseitige Bereiche, die sich auf unterschiedlichen Höhen befinden, und einen diese zwei Bereiche verbindenden Bereich hat,
**dadurch gekennzeichnet, dass** die zwei Tragearme (20) jeweils ein C-Profil aufweisen,
wobei die C-Profile der Tragearme (20) sich jeweils in Richtung der mindestens einen Funktionskomponente (3) öffnen, und
wobei die mindestens eine Funktionskomponente (3) teilweise in von den C-Profilen umschlossenen Bereichen angeordnet ist.

3. Klimagerät (1) nach Anspruch 1 oder Anspruch 2,
wobei die zwei Tragearme (20) stirnseitig mittels eines Abschlusselements (23) miteinander kontaktiert sind,
wobei mindestens ein Tragearm (20) der mindestens zwei Tragearme (20) mehrteilig ausgestaltet ist und drei Teilkomponenten (25, 26, 27) aufweist,
wobei eine erste Teilkomponente (27) eine Stirnseite (21) des Tragearms (20) bildet, die die mindestens eine Funktionskomponente (3) trägt,
wobei eine zweite Teilkomponente (26) eine andere Stirnseite (22) des Tragearms (20) bildet, die Funktionskomponenten (2, 4, 5, 6) der Mehrzahl von Funktionskomponenten (2, 4, 5, 6) trägt, zu denen die mindestens eine Funktionskomponente (3) höher angeordnet ist, und
wobei eine dritte Teilkomponente (25) der Verbindung zwischen der ersten Teilkomponente (27) und der zweiten Teilkomponente (26) dient.

4. Klimagerät (1) nach Anspruch 3,
wobei Teilkomponenten (25, 26, 27) der drei Teilkomponenten (25, 26, 27) aus unterschiedlichen Materialien bestehen.

5. Klimagerät (1) nach einem der Ansprüche 1 bis 4,
wobei die mindestens eine Funktionskomponente (3), die die zwei Tragearme (20) tragen, ein Verflüssiger ist,
wobei die Funktionskomponenten (2, 4, 5, 6) der Mehrzahl von Funktionskomponenten (2, 3, 4, 5), zu denen die mindestens eine Funktionskomponente (3) höher angeordnet ist, einen Kompressor (2), eine Expansionsvorrichtung (4) und einen Verdampfer (5) umfassen,
wobei das Klimagerät (1) eine Isolationskomponente (30) aufweist,
wobei die Isolationskomponente (30) einige Funktionskomponenten (2, 4, 5) der Mehrzahl von Funktionskomponenten (2, 4, 5, 6) thermisch isolierend umfasst, zu denen die mindestens eine Funktionskomponente (3) höher angeordnet ist, wobei das Klimagerät (1) eine Umfassungskomponente (31) aufweist,
wobei die Umfassungskomponente (31) zumindest die von der Befestigungsseite (11) des Klimageräts (1) abweichenden Außenseiten des Klimageräts (1) bildet, und
wobei in der Umfassungskomponente (31) oberhalb der mindestens einen Funktionskomponente (3), die die zwei Tragearme (20) tragen, ein Verflüssiger-Gebläse (9a) angeordnet ist.

6. Klimagerät (1) nach Anspruch 5,
wobei es sich bei der Umfassungskomponente (31) um ein Tiefziehgehäuse aus einem Kunststoff handelt.

7. Klimagerät (1) nach einem der Ansprüche 1 bis 6,
wobei mindestens ein Tragearm (20) zumindest teilweise aus einem Strangpressteil besteht.

## Claims

1. An air-conditioning unit (1),
the air-conditioning unit (1) being configured for installation on a roof (100), the air-conditioning unit (1) including a plurality of functional components (2, 3, 4, 5, 6),
the functional components (2, 3, 4, 5, 6) being arranged in a housing (10),
the housing (10) having an attachment side (11) for installation on the roof (100),
the air-conditioning unit (1) including two support arms (20),
the two support arms (20) supporting at least one functional component (3) of the plurality of functional components (2, 3, 4, 5, 6) such that the at least one functional component (3) is arranged higher with respect to the attachment side (11) than other functional components (2, 4, 5, 6) of the plurality of functional components (2, 3, 4, 5, 6),
the two support arms (20) laterally encompassing the at least one functional component (3) so that each support arm (20) supports a different side of the at least one functional component (3),
the two support arms (20) each supporting the at least one functional component (3) in the area of a face side (21),
the two support arms (20) each having the shape of the capital letter "S" in that each support arm (20) has two face side portions which are positioned at different heights, and one portion connecting these two portions,
**characterized in that** the two support arms (20) each have a C-profile,
wherein the C-profiles of the support arms (20) each open toward the at least one functional component (3), and
wherein the at least one functional component (3) is partly arranged in areas encompassed by the C-profiles.

2. An air-conditioning unit (1),
the air-conditioning unit (1) being configured for installation on a roof (100),
the air-conditioning unit (1) including a plurality of functional components (2, 3, 4, 5, 6),
the functional components (2, 3, 4, 5, 6) being arranged in a housing (10),
the housing (10) having an attachment side (11) for installation on the roof (100),
the air-conditioning unit (1) including two support arms (20),
the two support arms (20) supporting at least one functional component (3) of the plurality of functional components (2, 3, 4, 5, 6) such that the at least one functional component (3) is arranged higher with respect to the attachment side (11) than other functional components (2, 4, 5, 6) of the plurality of functional components (2, 3, 4, 5, 6),
the two support arms (20) laterally encompassing the at least one functional component (3) so that each support arm (20) supports a different side of the at least one functional component (3),
the two support arms (20) each supporting the at least one functional component (3) in the area of a face side (21),
the two support arms (20) each having the shape of the capital letter "Z" without the middle crossbar in that each support arm (20) has two face side portions which are positioned at different heights, and one portion connecting these two portions,
**characterized in that** the two support arms (20) each have a C-profile,
wherein the C-profiles of the support arms (20) each open toward the at least one functional component (3), and
wherein the at least one functional component (3) is partly arranged in areas encompassed by the C-profiles.

3. The air-conditioning unit (1) according to claim 1 or claim 2,
wherein the two support arms (20) are contacted with each other on the face sides by means of a terminating element (23),
wherein at least one support arm (20) of the at least two support arms (20) is of a multi-part configuration and includes three subcomponents (25, 26, 27),
wherein a first subcomponent (27) forms a face side (21) of the support arm (20), which supports the at least one functional component (3),
wherein a second subcomponent (26) forms another face side (22) of the support arm (20), which supports functional components (2, 4, 5, 6) of the plurality of functional components (2, 4, 5, 6), relative to which the at least one functional component (3) is arranged higher, and
wherein a third subcomponent (25) serves for the connection between the first subcomponent (27) and the second subcomponent (26).

4. The air-conditioning unit (1) according to claim 3,
wherein subcomponents (25, 26, 27) of the three subcomponents (25, 26, 27) consist of different materials.

5. The air-conditioning unit (1) according to any of claims 1 to 4,
wherein the at least one functional component (3) that is supported by the two support arms (20) is a condenser,
wherein the functional components (2, 4, 5, 6) of the plurality of functional components (2, 3, 4, 5) in relation to which the at least one functional component (3) is arranged higher comprise a compressor (2), an expansion device (4) and an evaporator (5),
wherein the air-conditioning unit (1) includes an insulation component (30),
wherein the insulation component (30) encompasses some functional components (2, 4, 5) of the plurality of functional components (2, 4, 5, 6) in a thermally insulating manner, relative to which the at least one functional component (3) is arranged higher,
wherein the air-conditioning unit (1) includes an encompassing component (31),
wherein the encompassing component (31) forms at least the outer sides of the air-conditioning unit (1) that differ from the attachment side (11) of the air-conditioning unit (1), and
wherein a condenser fan (9a) is arranged in the encompassing component (31) above the at least one functional component (3) that is supported by the two support arms (20).

6. The air-conditioning unit (1) according to claim 5,
wherein the encompassing component (31) is a thermoformed housing made from a plastic material.

7. The air-conditioning unit (1) according to any of claims 1 to 6,
wherein at least one support arm (20) consists at least partly of an extruded part.

## Revendications

1. Climatiseur (1),
le climatiseur (1) étant réalisé pour le montage sur un toit (100),
le climatiseur (1) présentant une pluralité de composants fonctionnels (2, 3, 4, 5, 6),
les composants fonctionnels (2, 3, 4, 5, 6) étant agencés dans un boîtier (10),
le boîtier (10) présentant un côté de fixation (11) pour le montage sur le toit (100),
le climatiseur (1) présentant deux bras de support (20),
les deux bras de support (20) supportant au moins un composant fonctionnel (3) parmi la pluralité de composants fonctionnels (2, 3, 4, 5, 6) de sorte que ledit au moins un composant fonctionnel (3) est agencé plus haut que d'autres composants fonctionnels (2, 4, 5, 6) parmi la pluralité de composants fonctionnels (2, 3, 4, 5, 6) à partir du côté de fixation (11),
les deux bras de support (20) entourant ledit au moins un composant fonctionnel (3) latéralement, de sorte que chaque bras de support (20) supporte un côté différent dudit au moins un composant fonctionnel (3),
les deux bras de support (20) portant ledit au moins un composant fonctionnel (3) respectivement dans la zone d'une face frontale (21),
les deux bras de support (20) présentant chacun la forme de la lettre majuscule "S", en ce que chaque bras de support (20) présente deux zones côté face frontale qui se trouvent à des hauteurs différentes, et une zone reliant ces deux zones,
**caractérisé en ce que** les deux bras de support (20) présentent chacun un profil en C,
les profils en C des bras de support (20) s'ouvrant respectivement en direction dudit au moins un composant fonctionnel (3), et
ledit au moins un composant fonctionnel (3) étant partiellement agencé dans des zones entourées par les profils en C.

2. Climatiseur (1),
le climatiseur (1) étant réalisé pour le montage sur un toit (100),
le climatiseur (1) présentant une pluralité de composants fonctionnels (2, 3, 4, 5, 6),
les composants fonctionnels (2, 3, 4, 5, 6) étant agencés dans un boîtier (10),
le boîtier (10) présentant un côté de fixation (11) pour le montage sur le toit (100),
le climatiseur (1) présentant deux bras de support (20),
les deux bras de support (20) supportant au moins un composant fonctionnel (3) parmi la pluralité de composants fonctionnels (2, 3, 4, 5, 6) de sorte que ledit au moins un composant fonctionnel (3) est agencé plus haut que d'autres composants fonctionnels (2, 4, 5, 6) parmi la pluralité de composants fonctionnels (2, 3, 4, 5, 6) à partir du côté de fixation (11),
les deux bras de support (20) entourant ledit au moins un composant fonctionnel (3) latéralement, de sorte que chaque bras de support (20) supporte un côté différent dudit au moins un composant fonctionnel (3),
les deux bras de support (20) portant ledit au moins un composant fonctionnel (3) respectivement dans la zone d'une face frontale (21),
les deux bras de support (20) présentant chacun la forme de la lettre majuscule "Z" sans la barre transversale médiane, en ce que chaque bras de support (20) présente deux zones côté face frontale qui se trouvent à des hauteurs différentes, et une zone reliant ces deux zones,
**caractérisé en ce que** les deux bras de support (20) présentent chacun un profil en C,
les profils en C des bras de support (20) s'ouvrant respectivement en direction dudit au moins un composant fonctionnel (3), et
ledit au moins un composant fonctionnel (3) étant partiellement agencé dans des zones entourées par les profils en C.

3. Climatiseur (1) selon la revendication 1 ou la revendication 2,
les deux bras de support (20) étant en contact l'un avec l'autre du côté face frontale au moyen d'un élément d'extrémité (23),
au moins un bras de support (20) parmi lesdits au moins deux bras de support (20) étant réalisé en plusieurs parties et présentant trois composants partiels (25, 26, 27),
un premier composant partiel (27) formant une face frontale (21) du bras de support (20) qui porte ledit au moins un composant fonctionnel (3),
un deuxième composant partiel (26) formant une autre face frontale (22) du bras de support (20) qui porte des composants fonctionnels (2, 4, 5, 6) parmi la pluralité de composants fonctionnels (2, 4, 5, 6), par rapport auxquels ledit au moins un composant fonctionnel (3) est agencé plus haut, et
un troisième composant partiel (25) servant de liaison entre le premier composant partiel (27) et le deuxième composant partiel (26).

4. Climatiseur (1) selon la revendication 3,
des composants partiels (25, 26, 27) parmi les trois composants partiels (25, 26, 27) étant constitués de matériaux différents.

5. Climatiseur (1) selon l'une des revendications 1 à 4,
ledit au moins un composant fonctionnel (3) supportant les deux bras de support (20) étant un condenseur,
les composants fonctionnels (2, 4, 5, 6) parmi la pluralité de composants fonctionnels (2, 3, 4, 5) par rapport auxquels ledit au moins un composant fonctionnel (3) est agencé plus haut, comprenant un compresseur (2), un dispositif de détente (4) et un évaporateur (5),
le climatiseur (1) comprenant un composant d'isolation (30),
le composant d'isolation (30) entourant certains composants fonctionnels (2, 4, 5) parmi la pluralité de composants fonctionnels (2, 4, 5, 6) de manière thermiquement isolée, par rapport auxquels ledit au moins un composant fonctionnel (3) est agencé plus haut,
le climatiseur (1) comprenant un composant d'encadrement (31),
le composant d'encadrement (31) formant au moins les côtés extérieurs du climatiseur (1) qui sont différents du côté de fixation (11) du climatiseur (1), et
une soufflante de condenseur (9a) étant agencée dans le composant d'encadrement (31) au-dessus dudit au moins un composant fonctionnel (3) qui porte les deux bras de support (20).

6. Climatiseur (1) selon la revendication 5,
le composant d'encadrement (31) étant un boîtier d'emboutissage profond en une matière plastique.

7. Climatiseur (1) selon l'une des revendications 1 à 6,
ledit au moins un bras de support (20) étant constitué au moins partiellement d'une pièce extrudée.
